Europäisches Patentamt

European Patent Office

Office européen des brevets

(11) Veröffentlichungsnummer: **0 365 742**
**A1**

## (12) EUROPÄISCHE PATENTANMELDUNG

(21) Anmeldenummer: **89110361.6**

(22) Anmeldetag: **08.06.89**

(51) Int. Cl.⁵: **F41F 5/00**

(30) Priorität: **05.10.88 DE 3833817**

(43) Veröffentlichungstag der Anmeldung:
**02.05.90 Patentblatt 90/18**

(84) Benannte Vertragsstaaten:
**DE FR GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Hütter, Horst**
**Schwaighofstrasse 22**
**D-8180 Tegernsee(DE)**

(54) **Vorrichtung zum Sichern und Scharfmachen von Submunitionskörpern.**

(57) Eine Vorrichtung 10 oder 20 zum Sichern und Scharfmachen von Submunitionskörpern, die in einem an einem Fluggerät 1 angebrachten, nicht abwerfbaren Submunitionsbehälter 2 untergebracht sind, besteht aus in einem Gehäuse 3 an der Unterseite des Fluggerätes 1 angeordneten Auslöseeinheit 4, Rechner 5 und Batterie 6 sowie aus im Submunitionsbehälter 2 untergebrachten Stelleinrichtung 9 und Scharfmacheinrichtung 14 oder 25. In der Auslöseeinheit 4 ist ein durch ein Relais in zwei Stellungen verschiebbarer Stift 8 angeordnet, der eine Schlaufe 7 eines Seilzuges 18 in der ersten Stellung mit einer kleineren und in der zweiten Stellung mit einer größeren Haltekraft hält. Die aus einer Kolben-Zylinder-Einheit bestehende Stelleinrichtung 9 betätigt über den Seilzug 18 die Scharfmacheinrichtung 14 oder 25.

EP 0 365 742 A1

FIG. 1

Xerox Copy Centre

## Vorrichtung zum Sichern und Scharfmachen von Submunitionskörpern

Die Erfindung betrifft eine Vorrichtung zum Sichern und Scharfmachen von Submunitionskörpern, die in einem an einem Fluggerät angebrachten, nicht abwerfbaren Submunitionsbehälter untergebracht sind.

Bekannt sind Vorrichtungen zum Sichern und Scharfmachen von Abwurfwaffen, wie z.B. Bomben, die in einem direkt in einem Fluggerät untergebrachten Magazinschacht angeordnet sind. Dabei werden die an Haltebügeln angebrachten gesicherten Abwurfwaffen durch vom fliegenden Personal direkt oder indirekt zu betätigenden Bedienungseinrichtungen unabhängig voneinander beim Einsatz scharf gemacht oder auch ggf. wieder gesichert. Derartige Vorrichtungen sind z.B. in den DE-OS 30 01 203 und 34 30 107 beschrieben. In einem außerhalb am Fluggerät angebrachten, nicht abwerfbaren Submunitionsbehälter untergebrachte Submunitionskörper, z.B. Bomben, Minen oder kleine Flugkörper, können bisher außer zum Scharfmachen vom fliegenden Personal oder durch im Fluggerät befindliche Einrichtungen nicht weiter beeinflußt werden. Das Scharfmachen erfolgt dabei durch einen Stromimpuls zum Anzünden von Gasgeneratoren, die dann die Submunitionskörper aus dem Behälter ausstoßen.

Der Erfindung liegt die Aufgabe zugrunde, eine Vorrichtung der eingangs genannten Art zu schaffen, bei der das Sichern und Scharfmachen durch das fliegende Personal sowie durch im Fluggerät untergebrachte gesonderte Einrichtungen ermöglicht wird.

Diese Aufgabe wird durch die im Anspruch 1 gekennzeichneten Merkmale gelöst. Vorteilhafte Weiterbildungen der Erfindung sind in den Unteransprüchen gekennzeichnet.

Die erfindungsgemäße Vorrichtung ermöglicht den direkten Zugriff vom Fluggerät aus auf das Sichern und Scharfmachen der im außen am Fluggerät im Submunitionsbehälter untergebrachten Submunitionskörper. Durch das Einwirken der Auslöseeinheit und der Stelleinrichtung auf den Seilzug zum Betätigen der Scharfmacheinrichtung kann nicht nur das Scharfmachen sondern auch ein Widersichern der Submunitionskörper entweder direkt durch das fliegende Personal oder durch den Rechner vorgenommen werden. Die Submunitionskörper können somit in gleicher Weise wie direkt im Magazinschacht eines Fluggerätes untergebrachte Abwurfwaffen gesichert und scharf gemacht werden.

Einzelheiten der mit der erfindungsgemäßen Vorrichtung vorhandenen Möglichkeiten werden nachstehend an Hand der in der Zeichnung schematisch dargestellten Ausführungsbeispiele erläutert. Es zeigen:

Fig. 1 eine erste Ausführungsform einer Vorrichtung zum Sichern und Scharfmachen von in einem Submunitionsbehälter untergebrachten Submunitionskörpern im gesicherten Zustand;

Fig. 2 die Vorrichtung nach Fig. 1 im scharfgemachten Zustand;

Fig. 3 die Vorrichtung nach Fig. 1 bei einer Fehlfunktion;

Fig. 4 eine zweite Ausführungsform einer Vorrichtung nach Fig. 1 im gesicherten Zustand und

Fig. 5 die Vorrichtung nach Fig. 4 im scharfgemachten Zustand.

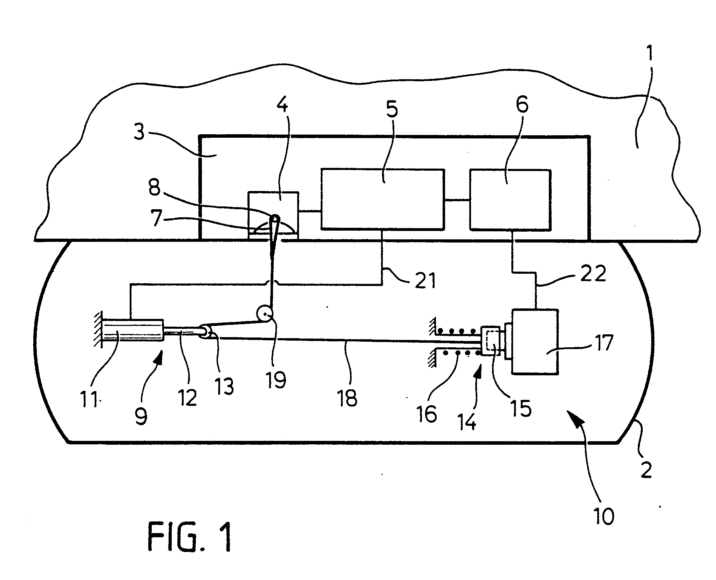

Fig. 1 zeigt einen Ausschnitt von der Unterseite eines Fluggerätes 1 mit einem angesetzten Submunitionsbehälter 2 für nicht dargestellte Submunitionskörper. Innerhalb des Fluggerätes 1 sind in einem Gehäuse 3 eine Auslöseeinheit 4, ein Rechner 5 und eine Batterie 6 vorhanden, die durch elektrische Leitungen miteinander verbunden sind. In die Auslöseeinheit 4 ist eine Seilschlaufe 7 eingehängt, die durch einen Stift 8 gehalten ist. Der Stift 8 kann durch ein nicht dargestelltes Relais in zwei Stellungen verschoben werden. In der ersten Stellung kann die Seilschlaufe 7 bei einer Kraft von z.B. 200 N über den Stift 8 abgezogen werden. In der zweiten Stellung ist der Stift 8 ganz durch die Seilschlaufe 7 durchgezogen, wobei er nur mit einer Kraft von z.B. 800 N abgeschert werden kann. Im Submunitionsbehälter 2 ist eine Stelleinrichtung 9 mit einem Zylinder 11, einem Kolben 12 mit angesetzter Seilrolle 13 und eine Scharfmacheinrichtung 14 vorhanden. Letztere besteht aus einem elektrischen Kurzschlußstecker 15, der durch eine Feder 16 in die Schließstellung gedruckt ist und aus einem Anzündgehäuse 17. Ein an die Schlaufe 7 angesetzter Seilzug 18 ist über eine Umlenkrolle 19 und die Seilrolle 13 mit dem Kurzschlußstecker 15 verbunden. Der Kolben 12 der Stelleinrichtung 9 übt beim Einfahren in den Zylinder 11 über den Seilzug 18 eine Kraft von z.B. 300 N auf die Seilschlaufe 7 und den Kurzschlußstecker 15 aus. Der Zylinder 11 der Stelleinrichtung 10 ist über eine elektrische Leitung 21 mit dem Rechner 5 und das Anzündgehäuse 17 der Scharfmacheinrichtung 14 über eine weitere elektrische Leitung 22 mit der Batterie 6 verbunden.

Die in Fig. 1 dargestellte erste Ausführungsform einer Vorrichtung 10 zum Sichern und Scharfmachen der in dem Submunitionsbehälter 2 untergebrachten Submunitionskörper ist im durch den Rechner 5 überprüften gesicherten Zustand gezeigt. Dieser Zustand ist maßgebend für den Aufenthalt am Boden und für alle Flugzustände außer dem direkten Einsatz. Dabei ergeben sich die nachfolgend aufgeführten Verhältnisse:

- Der Stift 8 ist in seiner ersten Stellung mit der geringeren Haltekraft für die Seilschlaufe 7,
- die Stelleinrichtung 9 ist nicht betätigt,
- im Anzündgehäuse 17 ist der Stromkreis unterbrochen.

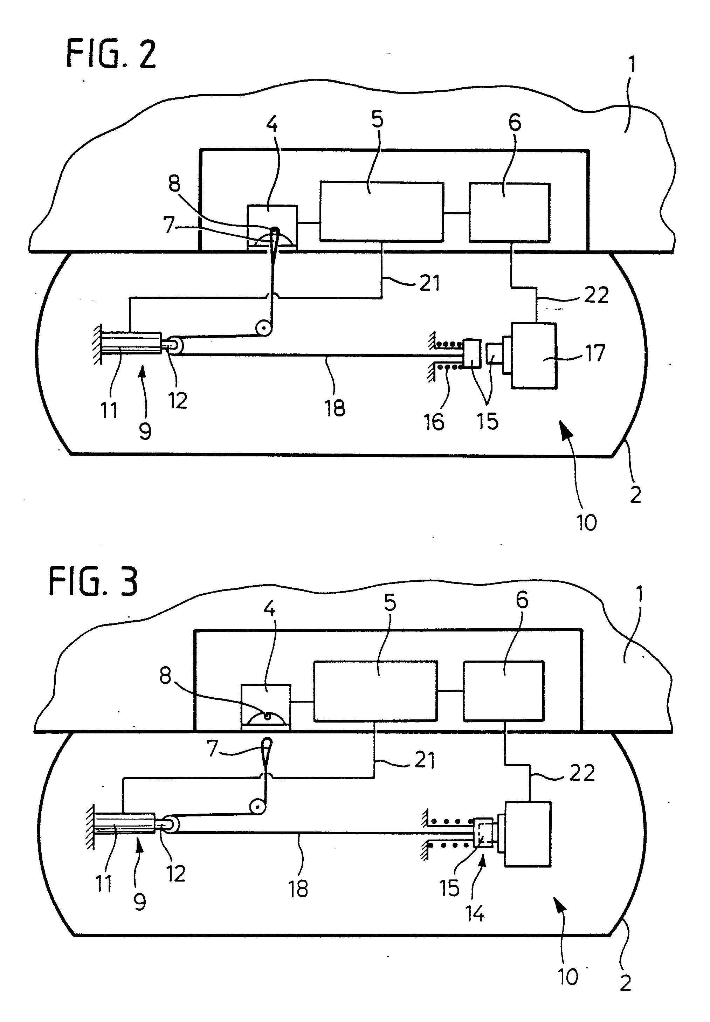

Fig. 2 zeigt die Vorrichtung 10 in der Einsatzstellung, wenn die Submunitionskörper aus dem Behälter 2 ausgestoßen werden sollen. Zur Erzielung dieses Zustandes ist nachfolgendes erforderlich:

- Der Stift 8 ist in seiner zweiten Stellung mit der hohen Haltekraft für die Seilschlaufe,
- der Rechner 5 gibt über die Leitung 21 einen Impuls in die Stelleinrichtung 9, wodurch der Kolben 12 in den Zylinder 11 eingezogen wird,
- der Kolben 12 zieht mit dem Seilzug 18 den Kurzschlußstecker 15 entgegen der Kraft der Feder 16 auseinander,
- im Gehäuse 17 wird der Zündstrom für die Anzündung von einem oder mehreren nicht dargestellten Gasgeneratoren zum Ausstoßen der Submunitionskörper freigegeben.

Fig. 3 zeigt die Vorrichtung 10 bei einer Fehlfunktion der Stelleinrichtung 9. Dieser Fall kann eintreten, wenn in an und für sich gesichertem Zustand der Vorrichtung entsprechend Fig. 1 ein Betätigungsimpuls auf die Stelleinrichtung 9 gegeben wird, sei es durch einen Bedienungsirrtum des fliegenden Personals, durch eine fehlerhafte Funktion oder durch einen von außen kommenden Fremdimpuls. Der auf diese Fehlfunktionen programmierte Rechner 5 verhindert dabei, daß gleichzei- tig der Stift 8 in der Auslöseeinheit 4 auf die hohe Haltekraft vorge- schoben wird. Der Kolben 12 zieht also bei seinem Einfahren in den Zylinder 11 nicht den Kurzschlußstecker 15 auseinander, sondern die Halte- schlaufe 7 vom Stift 8 ab, weil letzteres weniger Kraft erfordert. Der Rechner ist also so programmiert, daß das gleichzeitige Verschieben des Stiftes 8 in seine zweite Stellung und die Betätigung der Stelleinrich- tung 9 nur bei wirklichen Einsatzbedingungen erfolgen kann. Dieses schließt auch ein, daß durch Eingabe von Freund-Feind-Kennungen in den Rechner 5 ein Angriff auf eigene Objekte verhindert wird.

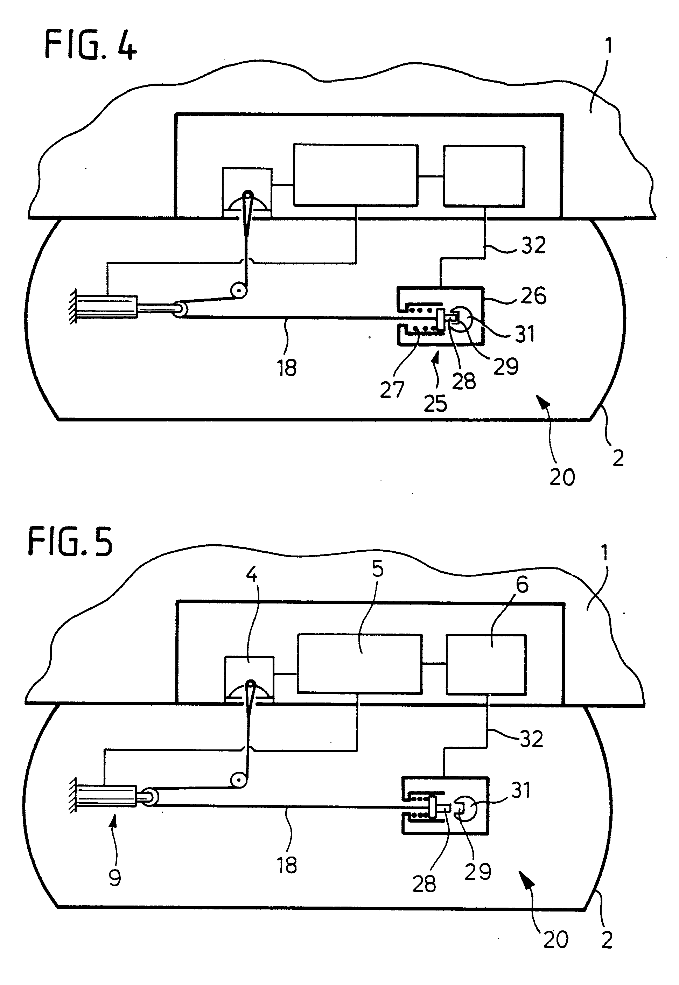

In den Fig. 4 und 5 ist als zweite Ausführungsform eine Vorrichtung 20 dargestellt. Diese unterscheidet sich von der Vorrichtung 10 lediglich durch eine andere Scharfmacheinrichtung 25 mit einem Gehäuse 26. Bei dem in Fig. 4 gezeigten gesicherten Zustand der Vorrichtung 20 drückt eine Feder 27 einen Stift 28 in eine Ausnehmung 29 eines Schiebers 31. Die Fig. 5 zeigt die Einsatzstellung der Vorrichtung 2C entsprechend der Einsatzstellung der Vorrichtung 10 in Fig. 2. Die Stelleinrichtung 9 zieht dabei mit dem Seilzug 18 den Stift 28 aus der Ausnehmung 29 des Schiebers 31, wodurch letzterer, angetrieben über eine Leitung 32 von der Batterie 6, in nicht dargestellter Weise den Anzündkanal für einen Gasgenerator freigeben kann, der die einzelnen Submunitionskörper ausstößt. An Stelle des Schiebers 31 kann z.B. auch ein Rotor die gleiche Funktion erfüllen.

## Ansprüche

1. Vorrichtung zum Sichern und Scharfmachen von Submunitionskörpern, die in einem an einem Fluggerät angebrachten, nicht abwerfbaren Submunitionsbehälter untergebracht sind, **dadurch gekennzeichnet,** daß eine Auslöseeinheit (1) im Fluggerät (1) mittels eines lösbaren Seilzuges (18) mit einer Stelleinrichtung (9) und Scharfmacheinrichtung (14,25) im Submunitionsbehälter (2) verbunden ist, wobei eine in der Auslöseeinheit (4) auf den Seilzug (18) ausgeübte Haltekraft je nach Eingabe in die Auslöseeinheit größer oder kleiner ist als eine durch die Stelleinrichtung (9) auf den Seilzug ausgeübte Kraft und eine zum Betätigen der Scharfmacheinrichtung benötigte Kraft.

2. Vorrichtung nach Anspruch 1, **dadurch gekennzeichnet,** daß in der Auslöseeinheit (4) ein durch ein Relais in zwei Stellungen verschiebbarer Stift (8) angeordnet ist, wobei eine am Seilzug (18) angebrachte Schlaufe (7) in der ersten Stellung mit der kleineren und in der zweiten Stellung mit der größeren Haltekraft gehalten ist.

3. Vorrichtung nach den Ansprüchen 1 und 2, **dadurch gekennzeichnet,** daß die Auslöseeinheit (4) mit einem Rechner (5) verbunden ist, der je nach Programm oder Einsatzart die Eingabe zur Betätigung des Zapfens (8) in die Auslöseeinheit gibt.

4. Vorrichtung nach den Ansprüchen 1 bis 3, **dadurch gekennzeichnet,** daß die aus einer elektrisch oder fluidisch angetriebenen Kolben-Zylinder-Einheit bestehende Stelleinrichtung (9) ihre Betätigungsimpulse durch den Rechner (5) erhält.

5. Vorrichtung nach den Ansprüchen 1 bis 4, **dadurch gekennzeichnet,** daß in der Scharfmacheinrichtung (14) ein durch eine Feder (16) belasteter Kurzschlußstecker (15) angeordnet ist, der beim Herausziehen durch den Seilzug (18) den Strom für die Anzündung von Gasgeneratoren zum Ausstoßen der Submunitionskörper freigibt.

6. Vorrichtung nach den Ansprüchen 1 bis 4, **dadurch gekennzeichnet,** daß in der Scharfmacheinrichtung (25) ein Schieber (31) oder Rotor (31) angeordnet ist, der nach dem Herausziehen eines durch eine Feder (27) belasteten Stiftes (28) durch den Seilzug (18) nacheinander durch einen Gasgenerator beaufschlagte Ausstoßkanäle für die

Submunitionskörper freigibt.

FIG. 1

# FIG. 2

# FIG. 3

**FIG. 4**

**FIG. 5**

10 566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.) 5 |
|---|---|---|---|
| A | US - A - 4 658 698 (J.BILLOT) * Anspruch 1 * -- | 1 | F 41 F 5/02 |
| A | US - A - 4 088 055 (W.F.WEST, C.V. CORRELL) * Anspruch 1 * -- | 1 | |
| P,A | EP - A1 - 0 305 285 (THOMSON-BRANDT ARMEMENTS) * Fig. 4A * ---- | 1 | |

RECHERCHIERTE SACHGEBIETE (Int. Cl.) 5

F 41 F 5/00
B 64 D 1/00

Der vorliegende Recherchenbericht wurde für alle Patentansprüche erstellt.

| Recherchenort | Abschlußdatum der Recherche | Prüfer |
|---|---|---|
| WIEN | 27-09-1989 | JASICEK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82